# EUROPEAN PATENT SPECIFICATION

(11) **EP 1 919 705 B1**
(45) Date of publication and mention of the grant of the patent: **18.02.2009**
(21) Application number: 06785293.9
(22) Date of filing: 21.06.2006
(51) Int. Cl.: B32B 27/00, B05D 3/06, B05D 3/10, B05D 3/14, B05D 7/00, C08J 7/18

(54) **PROCESSES FOR PRODUCING ORIENTED POLYMERIC FILMS PROVIDED WITH UV-ACTIVE COATINGS**
VERFAHREN ZUR HERSTELLUNG VON MIT UV-AKTIVEN BESCHICHTUNGEN VERSEHENEN ORIENTIERTEN POLYMERFOLIEN
PROCÉDÉS DE PRODUCTION DE FILMS POLYMÈRES ORIENTÉS MUNIS DE REVÊTEMENTS ACTIVÉS PAR UV

(30) Priority: 09.08.2005 US 200972
(43) Date of publication of application: 14.05.2008
(73) Proprietor: Exxonmobil Oil Corporation, A Corporation of the State of New York, Baytown, TX 77520 (US)
(72) Inventor: MAERTENS, Christophe, J., F-55600 Verneuil Grand (FR); LUO, Shifang, Clinton, NJ 08809 (US)
(74) Representative: Troch, Geneviève
(86) International application number: PCT/US2006/024207
(87) International publication number: WO 2007/021366

(56) References cited:
- WO-A-03/064061
- WO-A-20/04035667
- WO-A-20/04056910

## Description

### FIELD OF THE INVENTION

This disclosure relates to processes for in-line coating of oriented films during production of the oriented films.

### BACKGROUND OF THE INVENTION

Oriented films are used extensively in the packing and labeling industries and for other end use applications as well. Generally the films are produced by forming a polymeric extrudate and orienting the extrudate in single or multiple directions. In other words, the films may be oriented using any suitable techniques. The extrudate may be formed from a single polymeric material or coextrusion of multiple polymeric materials to produce single layer or multi-layer oriented films as desirable for a targeted end use. A wide variety of polymeric materials may be used to produce biaxially oriented polymeric films. U.S. Patents 2,736,066 to Chren; 3,380,868 to Moser; 4,853,602 to Hommes, et al.; and 5,691,043 to Keller disclose additional details regarding exemplary film orientation processes.

It is known to coat the surface of oriented films with a wide variety of coatings. Many such coatings are applied to provide sealing functionality to the surface of the film. U.S. Patent 5,419,960 to Touhsaent discloses a film with a low temperature sealable coating. The coating contains a copolymer of ethylene and acrylic or methacrylic acid. U.S. Patents 6,077,602 to Liestman, et al. and 5,843,582 to McGee disclose heat sealable film coatings containing a terpolymer produced from a nitrile monomer, an acrylate or 1,3 butadiene monomer, and an unsaturated carboxylic acid or sulfoethyl methacrylate. U.S. Patents 6,013,353 to Touhsaent and 5,827,615 to Touhsaent, et al. disclose metallized films with heat sealable coatings, in the surface of the metal, containing a copolymer of a carboxylic acid and an acrylate, or acrylonitrile or mixtures thereof.

U.S Patent 5,324,467 to Anderson describes coextrusion or extrusion coating processes for the preparation of an oriented multilayer laminate film, consisting of at least three layers, including a polypropylene layer, an adhesive layer of polar modified polyolefin, and a glycol or acid modified copolyester layer. The multilayer film is prepared by uniaxially or biaxially stretching castings. It is disclosed that the film has good heat sealability and high gas barrier.

U.S. Patents RE 36,287 to Ito, et al.; 6,335,479 to Yamada, et al.; 6,465,726 to Yamada, et al.; 6,841,222 to Murschall, et al.; and 6,855,395 to Janssens, et al. disclose various processes related to coating films during production of the films.

It is also known to provide film substrates with coatings containing UV-active compounds. Such coatings are typically applied by first subjecting a finished film substrate to corona, plasma, flame, UV radiation, or electron radiation treatments. The treated film substrate is then coated with a coating including a UV-active compound. The coating is then radiated to cross link the coating to adhere the coating to the film substrate. Exemplary coatings and process techniques are disclosed in U.S. Patents 6,733,847 to Kunz, et al. and 6,548,121 to Bauer, et al. and PCT Published Applications WO 2004/056496 to Kunz, et al. and WO 2003/064061 to Kunz, et al.

### BRIEF DESCRIPTION OF THE INVENTION

This disclosure relates to processes for producing oriented films having at least one surface provided with a bi-functional coating including at least one UV-active group and at least one unsaturated functional group. The processes described herein involve providing the coating on at least one surface of the oriented film substrate by applying the coating to the surface of the film substrate in-line during the film production process. In certain embodiments, the coating is applied prior to completion of the orientation process. In other embodiments, the coating is applied after completion of the orientation process and before completion of the film production process. In certain embodiments, the films are produced in a biaxial orientation process and the coating is applied between orientation steps while biaxially orienting the film. In certain embodiments, the coating is applied to the film surface after orientation of the film in the machine direction and prior to orientation of the film in the transverse direction.

In certain embodiments, the bi-functional coatings include from 0.1 wt.% to 99.9 wt.% of at least one compound containing at least one UV-active group and at least and from 0.1 wt.% to 99.9 wt.% of at least one compound containing at least one unsaturated functional group. The at least one UV-active group and the at least one unsaturated functional group may be provided by the same compound.

The coating may be applied to the film surface by any of a variety of techniques including gravure coating, roll coating, and spraying. In certain embodiments, the coating composition is applied at a concentration sufficient to provide a coating on the at least one surface of the finished oriented film at a concentration of 0.01 g/m² to 2 g/m². The coating may be applied to the film surface after the surface is treated by any of a variety of methods to energize the film surface such as plasma discharge, flame treatment, corona treatment, UV radiation, electron radiation, and combinations thereof. Alternatively, the coating may be applied to a non-treated film surface having a surface energy sufficient to promote adhesion.

Coated films produced by the processes described herein are suitable for use in a variety of applications including use as substrates for UV curable ink printing. The coating serves to enhance the adherence of UV curable inks and/or adhesives to the polymeric film surfaces. The coating may also be used to produce UV-protective laminate structures.

### DETAILED DESCRIPTION OF THE INVENTION

It is observed that oriented polymeric films, including biaxially oriented polymeric films, incorporating bi-functional coatings are produced in expensive and time consuming processes that apply the coating to a film surface after the film is produced in finished form. The coatings are applied after film substrates are produced in finished form and wound into rolls for storage and/or transport while awaiting processing, including coating the films with bi-functional coatings. Under these circumstances, it is necessary to unwind the film substrate and treat the film substrate to be coated prior to applying the bi-functional coating to the film substrate.

It has been discovered that oriented polymeric films incorporating bi-functional coatings may be produced by providing at least one bi-functional coating on at least one surface of the oriented film by applying the coating to the surface of the film in-line during the film production process. In certain embodiments, the coating is applied prior to completion of the orientation process. In other embodiments, the coating is applied after completion of the orientation process and before completion of the film production process.

Applying the bi-functional coatings in this manner simplifies the coating process leading to reduction of production costs. For example, certain embodiments described herein allow for application of coatings on reduced surface areas by application of the coating before orientation of the film is completed. WO 2003/064061 to Kunz, et al., at page 36, indicates that bi-functional coatings should be applied to a film surface as quickly as possible after surface treatment. The processes described may provide bi-functional coatings that adhere more securely to the film substrates as compared to coated films produced in conventional processes since the coatings may be applied more quickly after surface treatment as compared to conventional processes as described in WO 2003/064061 to Kunz, et al. The processes described herein may also allow for elimination or reduction of film surface treatments in comparison to conventional processes. As discussed above, films that are wound into rolls prior to application of bi-functional coatings generally must be surface treated after unwinding from the roll and prior to application of the bi-functional coating. Generally, these same films must also be surface treated prior to winding the film into the roll to facilitate the winding process. The processes described herein may allow the films to be surface treated only once to produce a bi-functional coated film that may be wound onto a roll. Another advantage of the processes described herein is the reduction of waste that would otherwise be the result of conventional coating processes. All of these advantages may lead to a reduced need for equipment and process time.

Bi-functional coatings used in the processes described herein are coatings incorporating at least one UV-active group and at least one unsaturated functional group. Additional details regarding the coatings and exemplary coatings are discussed hereinafter. The at least one bi-functional coating may be provided on at least one surface of the oriented film by applying the coating to the surface of the film during the film production process. In certain embodiments, the coating is applied prior to completion of the orientation process. In other embodiments, the coating is applied after completion of the orientation process and before completion of the film production process. In certain embodiments, the processes described herein involve providing at least one bi-functional coating on at least one surface of a biaxially oriented film by applying the coating to the surface of the film between the orientation steps for biaxially orienting the film. In other words, the processes described provide the coating on the film surface "in-line" at various stages during production of the oriented films.

In certain embodiments, the coating is applied in a biaxial orientation process between a step of orienting the film in a first direction and orienting the film in a second direction. In certain embodiments, the processes described herein provide a coating on at least one film surface after orientation of the film in the machine direction and prior to orientation of the film in the transverse direction. In other embodiments, the processes described herein are useful to provide a coating on at least one film surface after orientation of the film in the transverse direction and prior to orientation of the film in the machine direction. In certain specific embodiments, the coating is applied between successive orientations in the same direction. For example, in processes such as disclosed in U.S. Patent 5,691,043 to Keller, multiple film orientations in a single direction may be used. The processes described herein are useful for applying a bi-functional coating before or after any of the orientation steps, including between successive orientations in the same direction.

The processes described herein are useful to provide a coating on at least one surface of a wide variety of oriented film structures. The oriented polymeric film structures may be any single or multi-layer polymeric material that can be formed into a film. The film may be clear or opaque. Additionally, the film structures may be colored or have a matte finish. The opacity of opaque films may be achieved by cavitating, creating voids, in one or more layers of the polymeric film substrate or by other means. For example, cavitation may be achieved through the use of organic or inorganic voiding agents or though production techniques independent of the use of voiding agents.

Exemplary thermoplastic materials for use in the single and multiple film layers include any polyolefin such as polypropylene, polyethylene, polybutene, polystyrene, polyvinyl chloride, ethylene containing copolymers such as ethylene-propylene copolymers, ethylene containing terpolymers such as ethylene-propylene-butene terpolymers, butene containing copolymers such as butene-propylene copolymers, polar modified polyolefin, and blends thereof. Other suitable film materials include polyesters, including but not limited to homopolyesters, copolyesters, polyester based LCP, polyamide including oriented nylon, ethylene-vinyl alcohol copolymer (EVOH), and blends thereof. In still other embodiments, the polymeric material selected from the group of propylene homopolymers, propylene copolymers, ethylene homopolymers, ethylene copolymers, polar modified polyolefins, polyesters, polyamides, polystyrenes, ethylene-vinyl alcohol copolymers, and blends thereof. In certain embodiments, the polymeric material for a core layer is selected from a polymeric material selected from propylene homopolymers, propylene copolymers, and blends thereof.

In film structures having three or more layers, a polymeric skin may be provided on one or both surfaces of the biaxially oriented film structure. Exemplary skin layers may include polyethylene, including medium and high-density polyethylene, polypropylene, copolymers of propylene and ethylene, terpolymers of propylene, ethylene and butylene, polar modified polyolefins, and blends thereof. In certain embodiments; the skin layers are produced from a polymeric material selected from propylene homopolymers, propylene copolymers, ethylene homopolymers, ethylene copolymers, ethylene/propylene/ butene terpolymers, polar modified polyolefins, and blends thereof.

The various layers of the multiple layer film structures described herein may incorporate processing aids or inorganic particulates such as titanium dioxide or void initiating agents to enhance the whiteness or color of the substrate or to enhance antiblocking properties. Exemplary void initiators and void producing techniques are disclosed in U.S. Patents 5,885,721 to Su, et al. and 6,168,826 to Su, et al. Exemplary additional additives are slip, anti-block, and antistatic agents that are well known in the art and used to improve substrate functionality and properties. Additionally, as mentioned previously, the substrate may be metallized.

The film structures described herein may include a polymeric substrate incorporating (i) at least one layer having a first surface and a second surface and (ii) at least one skin layer as described above. The polymeric substrate portion of the film structures may incorporate single or multiple film layers. For example; the multi-layer film structures may be 3-layer structures with (A) the substrate portion being a 2-layer polymeric film that comprises (i) a core layer and (ii) a skin layer, wherein the skin layer is adjacent to a first surface of the core layer, and (B) an outer layer on a side of the core layer opposite the skin layer and adjacent to the second surface of the core layer. In such embodiments, the core layer may comprise polypropylene, polyethylene, polar modified polyolefins, and blends thereof. In other embodiments, the film structure may be a 4-layer structure with (A) the substrate portion being a 3-layer polymeric film which comprises (i) a core layer, (ii) a skin layer, and (iii) an adhesive tie layer imposed between the skin layer and the first surface of the core layer, and (B) an outer layer adjacent to the second surface of the core layer. In certain of these embodiments, the core layer may comprise polypropylene, polyethylene, and blends thereof. In other embodiments, the film structure may be a 5-layer structure with (A) the substrate being a 4-layer polymeric film which comprises (i) a central core layer, (ii) a skin layer, with (iii and iv) two intermediate layers adjacent to the central core layer, and with the skin layer adjacent to a first intermediate layer, and (B) an outer layer adjacent to a second intermediate layer. A skin layer of a multi-layer film structure may be adhered to another functional film layer of the adjacent film substrate through the use of a tie layer incorporating a tie resin.

Suitable adhesive tie resins include polar modified polyolefins. Polar modified polyolefins include olefin polymers having a polar monomer copolymerized therein, olefin polymers or copolymers grafted with acids or anhydrides, or derivatives thereof. Exemplary polar modified polyolefins include ethylene copolymers, and their ethylene acrylate copolymers (EA), anhydride-modified EA, acid terpolymers containing ester and acrylic functionalities, polar-modified PP such as maleic anhydride grafted polypropylene (PP-MAH), glycidyl methacrylate modified PP (PP-GMA), random terpolymers of ethylene, acrylic ester and glycidyl methacrylate, and blends thereof. These polymers may include at least one elastomer or polar modified elastomer as a toughener or tougheners, such as ethylene-propylene copolymers (EPM), polar modified EPM such as EPM-MAH, ethylene-butylene copolymers, polar modified ethylene-butylene copolymers, ethylene-octene copolymers, polar modified ethylene-octyne copolymers, styrene-butadiene-styrene copolymers (SBS), polar modified SBS such as SBS-MAH, styrene-ethylene-butylene-styrene copolymers (SEBS), polar modified SEBS such as SEBS-MAH, and blends thereof.

A particular type of thermoplastic film which can be advantageously used in the substrate of the film structures described herein is molecularly oriented polypropylene, including syndiotactic polypropylene, isotactic polypropylene, and combinations thereof After extrusion of the substrate, for example, utilizing conventional extrusion techniques, the film is heated and molecularly oriented by stretching it in both the longitudinal and transverse directions. The resulting oriented film exhibits greatly improved tensile and stiffness properties. Typically polyolefin resins, such as polypropylene, are extruded through a flat sheet extruder die at a temperature ranging from between about 200°C to 260°C (392°F to 500°F), casting the film onto a cooling drum and quenching the film, The sheet is then stretched 3 times to 7 times in the machine direction (MD) orienter followed by stretching 5 times to 10 times in the transverse direction (TD) orienter.

As discussed above, the bi-functional coatings as described herein incorporate at least one UV-active group and at least one unsaturated functional group. The groups may be present in the same or different compounds. In certain embodiments, the coatings include 0.1 wt.% to 99.9 wt.% of at least one compound containing at least one UV-active group and from 0.1 wt.% to 99.9 wt.% of at least one compound containing at least one unsaturated functional group. In other embodiments, the coatings include 1 wt.% to 40 wt.% of at least one compound containing at least one UV-active group and from 1 wt.% to 40 wt.% of at least one compound containing at least one unsaturated functional group. In additional embodiments, the coatings include 5 wt.% to 30 wt.% of at least one compound containing at least one UV-active group and from 5 wt.% to 30 wt.% of at least one compound containing at least one unsaturated functional group.

Exemplary suitable compounds providing at least one UV-active group and at least one unsaturated functional group are disclosed in U.S. Patents 6,733,847 to Kunz, et al. and 6,548,121 to Bauer, et al, and PCT Published Applications WO 2004/056496 to Kunz, et al. and WO 2003/064061 to Kunz, et al.

For purposes of this disclosure, the term "unsaturated functional group" refers to chemical groups that are capable of undergoing radical or cationic polymerization. Acrylics, vinyl ethers, and styrenics are exemplary unsaturated functional groups that undergo radical polymerization. Cyclialiphatic epoxides and vinyl ethers are exemplary functional groups that undergo cationic polymerizations.

For purposes of this disclosure, UV-active groups are chemical groups that are capable of forming free radicals when irradiated with electromagnetic waves. Molecules containing such functional groups may undergo Norrish Type I cleavage or intermolecular H-abstraction. Examples of molecules that undergo Norrish Type I cleavage are Benzoin ethers, alpha-hydroxylacetophenones, alpha aminoacetylphenones, etc. Examples of molecules that undergo intermolecular H-abstraction are benzophenones, benzils, Xanthones, and anthraquinones.

Coatings containing at least one unsaturated functional group and at least one UV-active group are typically emulsions formed in organic solvents or water, or mixtures thereof. Exemplary organic solvents are alcohols such as ethanol, isopropyl alcohol, n-butanol, sec-butyl alcohol, and ter-butylalcohol. Certain additives may be included in the coatings to stabilize the emulsion. Such additives may include surfactants, emulsifiers, PH buffer agents, etc. Other additives may also be added to the coating to enhance the film's surface property. For example, TiO2 may be added to enhance the film's whiteness, and silica gels may be added to increase surface roughness.

The coating compositions may be applied in any suitable manner such as by gravure coating, roll coating, spraying, etc. Squeeze rolls, doctor knives, etc., are useful to remove the excess coating solution. The coating should generally be applied in such amounts that, following curing, there will be deposited a smooth, evenly distributed layer on the finished film surface. In certain embodiments, the coating composition is applied at a thickness sufficient to provide a layer of 0.01 g/m² to 2 g/m² of the coating on the finished oriented film surface. In other embodiments, the coating composition is applied at a thickness sufficient to provide a layer of 0.1 g/m² to 1.5 g/m² of the coating on the finished oriented film surface. In additional embodiments, the coating composition is applied at a thickness sufficient to provide a layer of 0.5 g/m² to 1.2 g/m² of the coating on the oriented finished film.

It is important to note that in processes in which the film will be oriented following application of the coating composition, the thickness of the coating composition applied must be greater than the desired coating thickness on the finished oriented film to compensate for thinning of the coating upon stretching the film.

The oriented films for use in accordance with this disclosure may be oriented or blown films made from any of a number of processes. The oriented films may be manufactured in a variety of stretching and blowing processes. The orientation processes may include conventional sequential biaxial orientation processes, including multiple-step processes used to orient a film in a single direction such as disclosed in U.S. Patent 5,691,043 to Keller, machine direction orientation (MDO), double bubble, simultaneous longitudinal and transverse orientation (LISIM®), tape bubble, trapped bubble, blowing, and tenter framing. The use of linear motors to directly propel tenter clips to effect simultaneous longitudinal and transverse orientation is disclosed in U.S. Patent 4,853,602 to Hommes, et al. Hot-blown films are typically manufactured in a simple bubble process.

As is well known in polymeric film orientation processes, each orientation step takes place in an oven or heated zone that raises the temperature, of the polymeric material above the glass transition temperature of the polymeric material to allow stretching of the polymeric material to "orient" the molecules of the polymeric materials.

In certain embodiments, application of the coatings described herein may take place prior to any of the orientation steps in any of the processes described here. In other embodiments, application of the coatings described herein may take place after completion of all of the orientation steps in any of the processes described herein but before completion of the production of the film. As such, the coating is applied before the film is wound at a winding station.

As discussed, in certain embodiments; the coated films described herein are biaxially oriented films. In certain embodiments, the coatings described herein are applied prior to completion of the biaxial orientation of the film is complete. In certain particular embodiments, the coating takes place after orientation of the film in a first direction and before the film is oriented in a second direction. Such processes may be carried out as follows. A polymeric material extrudate is passed to a first orientation zone where the extrudate is heated above the glass transition temperature of the polymeric material and stretched in a first direction to form a polymeric substrate. After the uniaxially oriented film is removed from the first orientation zone, in certain embodiments, the surface of the substrate to be coated may be treated to enhance its surface tension to promote good wetting and adhesion of the coating to the surface of the film. In certain embodiments, the film surface may be left untreated if the surface has surface energy sufficient to promote adhesion of the coating. Certain polymeric materials used in film skin layers with polar functionality are more likely to have such surface energies. Exemplary polar polymeric materials are ethylene vinyl alcohol resins, nylon, and the like. In certain embodiments, films having a surface energy of at least 38 dyne/cm are left untreated. In other embodiments, films having a surface energy of at least 40 dyne/cm are left untreated.

In embodiments in which the films are surface treated, the treatment can be a plasma discharge, a corona discharge, flame, UV radiation, electron radiation, and combinations thereof. In certain embodiments, the film is treated to provide a surface energy on at least one surface of the film of at least 38 dyne/cm. In other embodiments, the film is treated to provide a surface energy on at least one surface of the film of at least 40 dyne/cm. In still other embodiments, the film is treated to provide a surface energy on at least one surface of the film of at least 42 dyne/cm. In additional embodiments, the film is treated to provide a surface energy on at least one surface of the film of 38 dyne/cm to 42 dyne/cm.

The polymeric substrate with at least one surface having a surface energy as described above, is coated with the coating incorporating at least one UV-active group and at least one unsaturated functional group by any of the means described above.

Once applied, the coating may be dried first then cured or dried and cured simultaneously. The drying of the coating may be accomplished by the application of thermal energy. The curing step may be accomplished by the application of electromagnetic energy such as UV light. The drying and curing steps may take place at any stage of the orientation line after the surface is coated. For example, the curing step may take place in the process of preheating the film prior to the step of orienting the film in a second direction or at any other location prior to entry into the second orientation zone. The curing step may also take place within the second orientation oven or zone as the film is oriented in a second direction. The curing step may also take place after the second orientation step. For example, curing may take place in an annealing station subsequent to the second orientation oven or zone. In certain embodiments, the required electromagnetic energy is provided by UV lights in the orientation line.

In certain embodiments, an exemplary system for conducting the methods and processes described herein to produce a coated biaxially oriented film includes a biaxial orientation film line. A film extrudate is produced by an extruder. The extrudate is oriented in the machine direction in a first orientation zone in the orientation line to produce a uniaxially polymeric substrate. After exiting the first orientation zone, the polymeric substrate is subjected to a corona discharge treatment at discharge station to enhance adhesion to the surface of the polymeric substrate. The treated substrate is then coated with a water-based or other solvent-based composition containing at least one compound including at least one UV-active group and at least one compound including at least one unsaturated functional group by a gravure coating system. The coated polymeric substrate is then directed to a second orientation zone in the orientation line where the substrate is oriented in the transverse direction to produce a biaxially oriented film. After exiting the second orientation zone, the biaxially oriented film is transferred to an annealer to slowly cool the biaxially oriented film to a temperature below the glass transition temperature of the film. The annealer is also provided with a UV radiation source that is used to cure the coating on the film.

With respect to the various ranges set forth herein, any upper limit recited may, or course, be combined with any lower limit for selected sub-ranges.

Although films and processes for producing the films described herein have been described in detail, it should be understood that various changes, substitutions, and alternations could be made.

## Claims

1. A process for producing a cured, coated, oriented polymeric film substrate comprising:
(a) coating at least one surface of a uniaxially oriented polymeric film substrate with a coating, to produce a coated, uniaxially oriented polymeric film substrate with at least one coated surface, wherein the coating comprises at least one compound containing at least one UV-active group and at least one compound containing at least one unsaturated functional group;
(b) orienting the coated, uniaxially oriented polymeric film substrate in a second direction to produce a coated, biaxially oriented polymeric film substrate; and
(c) subjecting the coated, biaxially oriented polymeric film substrate to electromagnetic energy, to produce the cured, coated, biaxially oriented polymeric film substrate,

2. The process of claim 1, wherein the at least one surface of the uniaxially oriented polymeric film substrate has a surface energy of at least 38 dyne/cm prior to coating the at least one surface of the polymeric film substrate.

3. The process according to any of the preceding claims, wherein the uniaxially oriented polymeric film substrate is oriented from 3 to 7 times in the machine direction.

4. The process according to any of the preceding claims, wherein the uniaxially oriented polymeric film substrate is oriented from 5 to 10 times in the transverse direction.

5. The process according to any of the preceding claims, wherein the coated, uniaxially oriented polymeric film substrate is oriented from 3 to 7 times in the machine direction.

6. The process according to any of the preceding claims, wherein the coated, uniaxially oriented polymeric film substrate is oriented from 5 to 10 times in the transverse direction.

7. The process according to any of the preceding claims, wherein the uniaxially oriented polymeric film substrate is oriented in the machine direction prior to coating and thereafter oriented in the transverse direction after coating, to produce the coated, biaxially oriented polymeric film substrate.

8. The process of any of the preceding claims wherein the electromagnetic energy is in the form of UV light.

9. The process of any of the preceding claims, wherein the at least one UV-active group is a chemical group capable of forming a free radical when subjected to the electromagnetic energy.

10. The process according to any of the preceding claims, wherein the at least one unsaturated functional group is selected from the group consisting of acrylics, vinyl ethers, styrenics, and cycloaliphatic epoxides, and combinations thereof.

11. The process according to any of the preceding claims, wherein the coating comprises 1 to 40 wt.% of at least one compound comprising at least one UV-active group and 1 to 40 wt.% of at least one compound comprising at least one unsaturated functional group.

12. The process according to any of the preceding claims, wherein the coating comprises 5 to 30 wt.% of at least one compound comprising at least one UV-active group and 5 to 30 wt.% of at least one compound comprising at least one unsaturated functional group.

13. The process according to any of the preceding claims, wherein the coating on the at least one surface of the biaxially oriented polymeric film substrate is present at a concentration of 0.01 to 2 g/m² when dry.

14. The process according to any of the preceding claims, wherein the coating on the biaxially oriented coated substrate is present at a concentration of 0.1 to 1.5 g/m² when dry.

15. The process according to any of the preceding claims, wherein the step of curing process takes place during one of (i) prior to the orientation in the second direction, (ii) during orientation in the second direction, (iii) after orientation in the second direction, and (iv) both prior to and during the orientation in the second direction.

16. The process according to any of the preceding claims, wherein the polymeric film substrate comprises at least one layer comprised of a polymeric material selected from the group consisting of propylene homopolymers, propylene copolymers, ethylene homopolymers, ethylene copolymers, butene homopolymers, butene copolymers, polar modified polyolefins, polyesters polyamides, polystyrenes, ethylene-vinyl alcohol copolymers, and blends thereof.

17. The process of any of the preceding claims, wherein the polymeric film substrate further comprises a second layer comprised of a material selected from the group consisting of propylene homopolymers, propylene copolymers, ethylene homopolymers, ethylene copolymers, polar modified polyolefins, polyesters, polyamides, polystyrenes, ethylene-vinyl alcohol copolymers, and blends thereof.

18. The process of claim 1, wherein the polymeric film substrate comprises a core layer comprising a polymeric material selected from the group consisting of propylene homopolymers, propylene copolymers, and blends thereof.

19. The process of claim 18, wherein the polymeric film substrate comprises a first skin layer and a tie layer disposed between the core layer and the first skin layer.

20. The process of claim 18 and 19, wherein the polymeric film substrate comprises a second skin layer opposite the first skin layer which comprises a polymeric material selected from the group consisting of propylene homopolymers, propylene copolymers, ethylene homopolymers, ethylene copolymers, ethylene/propylene/ butene terpolymers, butene homopolymers, butene copolymers, polar modified polyolefins, and blends thereof.

21. The process according to any of the preceding claims, wherein the at least one surface of the polymeric film substrate is subjected to at least one surface treatment prior to coating the at least one surface of the polymeric film substrate, the surface treatment selected from the group consisting of plasma discharge, flame, corona treatment, UV radiation, electron radiation, and combinations thereof.

22. The process according to any of the preceding claims, wherein the polymeric film substrate is opaque.

23. The process according to any of the preceding claims, wherein at least one layer of the polymeric film substrate is cavitated.

## Patentansprüche

1. Verfahren zur Herstellung eines gehärteten, beschichteten, orientierten Polymerfoliensubstrats, bei dem
(a) mindestens eine Oberfläche eines uniaxial orientierten Polymerfoliensubstrats mit einer Beschichtung beschichtet wird, um ein beschichtetes, uniaxial orientiertes Polymerfoliensubstrat mit mindestens einer beschichteten Oberfläche zu produzieren, wobei die Beschichtung mindestens eine Verbindung, die mindestens eine UV-aktive Gruppe enthält, und mindestens eine Verbindung umfasst, die mindestens eine ungesättigte funktionale Gruppe enthält;
(b) das beschichtete, uniaxial orientierte Polymerfoliensubstrat in einer zweiten Richtung orientiert wird, um ein beschichtetes, biaxial orientiertes Polymerfoliensubstrat zu produzieren, und
(c) das beschichtete, biaxial orientierte Polymerfoliensubstrat elektromagnetischer Energie ausgesetzt wird, um das gehärtete, beschichtete, biaxial orientierte Polymerfoliensubstrat zu produzieren.

2. Verfahren nach Anspruch 1, bei dem die mindestens eine Oberfläche des uniaxial orientierten Polymerfoliensubstrats vor dem Beschichten der mindestens einen Oberfläche des Polymerfoliensubstrats eine Oberflächenenergie von mindestens 38 dyne/cm aufweist.

3. Verfahren nach einem der vorhergehenden Ansprüche, bei dem das uniaxial orientierte Polymerfoliensubstrat 3- bis 7-fach in Maschinenrichtung orientiert wird.

4. Verfahren nach einem der vorhergehenden Ansprüche, bei dem das uniaxial orientierte Polymerfoliensubstrat 5- bis 10-fach in Querrichtung orientiert wird.

5. Verfahren nach einem der vorhergehenden Ansprüche, bei dem das beschichtete, uniaxial orientierte Polymerfoliensubstrat 3- bis 7-fach in Maschinenrichtung orientiert wird.

6. Verfahren nach einem der vorhergehenden Ansprüche, bei dem das beschichtete, uniaxial orientierte Polymerfoliensubstrat 5- bis 10-fach in Querrichtung orientiert wird.

7. Verfahren nach einem der vorhergehenden Ansprüche, bei dem das uniaxial orientierte Polymerfoliensubstrat vor dem Beschichten in Maschinenrichtung orientiert wird und anschließend nach dem Beschichten in Querrichtung orientiert wird, um das beschichtete, biaxial orientierte Polymerfoliensubstrat zu produzieren.

8. Verfahren nach einem der vorhergehenden Ansprüche, bei dem die elektromagnetische Energie in Form von UV-Licht vorliegt.

9. Verfahren nach einem der vorhergehenden Ansprüche, bei dem die mindestens eine UV-aktive Gruppe eine chemische Gruppe ist, die ein freies Radikal bilden kann, wenn sie der elektromagnetischen Energie ausgesetzt wird.

10. Verfahren nach einem der vorhergehenden Ansprüche, bei dem die mindestens eine ungesättigte funktionale Gruppe ausgewählt ist aus der Gruppe bestehend aus Acrylgruppen, Vinylethern, Styrolgruppen und cycloaliphatischen Epoxiden sowie Kombinationen davon.

11. Verfahren nach einem der vorhergehenden Ansprüche, bei dem die Beschichtung 1 bis 40 Gew.-% von mindestens einer Verbindung, die mindestens eine UV-aktive Gruppe umfasst, und 1 bis 40 Gew.-% von mindestens einer Verbindung umfasst, die mindestens eine ungesättigte funktionale Gruppe umfasst.

12. Verfahren nach einem der vorhergehenden Ansprüche, bei dem die Beschichtung 5 bis 30 Gew.-% von mindestens einer Verbindung, die mindestens eine UV-aktive Gruppe umfasst, und 5 bis 30 Gew.-% von mindestens einer Verbindung umfasst, die mindestens eine ungesättigte funktionale Gruppe umfasst.

13. Verfahren nach einem der vorhergehenden Ansprüche, bei dem die Beschichtung auf der mindestens einen Oberfläche des biaxial orientierten Polymerfoliensubstrats im trockenen Zustand in einer Konzentration von 0,01 bis 2 g/m² vorliegt.

14. Verfahren nach einem der vorhergehenden Ansprüche, bei dem die Beschichtung auf dem biaxial orientierten Polymerfoliensubstrat im trockenen Zustand in einer Konzentration von 0,1 bis 1,5 g/m² vorliegt.

15. Verfahren nach einem der vorhergehenden Ansprüche, bei dem die Härtungsprozessstufe entweder (i) vor der Orientierung in der zweiten Richtung, (ii) während der Orientierung in der zweiten Richtung, (iii) nach der Orientierung in der zweiten Richtung und (iv) sowohl vor als auch während der Orientierung in der zweiten Richtung stattfindet.

16. Verfahren nach einem der vorhergehenden Ansprüche, bei dem das Polymerfoliensubstrat mindestens eine Schicht umfasst, die aus Polymermaterial ausgewählt aus der Gruppe bestehend aus Propylenhomopolymeren, Propylencopolymeren, Ethylenhomopolymeren, Ethylencopolymeren, Butenhomopolymeren, Butencopolymeren, polar modifizierten Polyolefinen, Polyestern, Polyamiden, Polystyrolen, Ethylen-Vinylalkohol-Copolymeren und Gemischen davon zusammengesetzt ist.

17. Verfahren nach einem der vorhergehenden Ansprüche, bei dem das Polymerfoliensubstrat ferner eine zweite Schicht umfasst, die aus Material ausgewählt aus der Gruppe bestehend aus Propylenhomopolymeren, Propylencopolymeren, Ethylenhomopolymeren, Ethylencopolymeren, polar modifizierten Polyolefinen, Polyestern, Polyamiden, Polystyrolen, Ethylen-Vinylalkohol-Copolymeren und Gemischen davon zusammengesetzt ist.

18. Verfahren nach Anspruch 1, bei dem das Polymerfoliensubstrat eine Kernschicht umfasst, die Polymermaterial ausgewählt aus der Gruppe bestehend aus Propylenhomopolymeren, Propylencopolymeren und Gemischen davon umfasst.

19. Verfahren nach Anspruch 18, bei dem das Polymerfoliensubstrat eine erste Hautschicht und eine Verbindungsschicht umfasst, die zwischen der Kernschicht und der ersten Hautschicht angeordnet ist.

20. Verfahren nach Anspruch 18 und 19, bei dem das Polymerfoliensubstrat eine zweite Hautschicht gegenüber der ersten Hautschicht umfasst, die ein Polymermaterial ausgewählt aus der Gruppe bestehend aus Propylenhomopolymeren, Propylencopolymeren, Ethylenhomopolymeren, Ethylencopolymeren, Ethylen/Propylen/Buten-Terpolymeren, Butenhomopolymeren, Butencopolymeren, polar modifizierten Polyolefinen und Gemischen davon umfasst.

21. Verfahren nach einem der vorhergehenden Ansprüche, bei dem die mindestens eine Oberfläche des Polymerfoliensubstrats vor dem Beschichten der mindestens einen Oberfläche des Polymerfoliensustrats mindestens einer Oberflächenbehandlung ausgewählt aus Plasmaentladung, Flammenbehandlung, Koronabehandlung, UV-Strahlung, Elektronenstrahlung und Kombinationen davon unterzogen wird.

22. Verfahren nach einem der vorhergehenden Ansprüche, bei dem das Polymerfoliensubstrat opak ist.

23. Verfahren nach einem der vorhergehenden Ansprüche, bei dem mindestens eine Schicht des Polymerfoliensubstrat kavitiert ist.

## Revendications

1. Procédé de production d'un substrat sous forme de film polymère durci, pourvu d'un revêtement, orienté, comprenant :
(a) le revêtement d'au moins une surface d'un substrat sous forme de film polymère orienté uniaxialement avec un revêtement, pour produire un substrat sous forme de film polymère pourvu d'un revêtement, orienté uniaxialement, comportant au moins une surface pourvue d'un revêtement, dans lequel le revêtement comprend au moins un composé contenant au moins un groupe activé par UV et au moins un composé contenant au moins un groupe fonctionnel insaturé ;
(b) l'orientation du substrat sous forme de film polymère pourvu d'un revêtement, orienté uniaxialement, dans une deuxième direction pour produire un substrat sous forme de film polymère pourvu d'un revêtement, orienté biaxialement ; et
(c) l'exposition du substrat sous forme de film polymère pourvu d'un revêtement, orienté biaxialement, à une énergie électromagnétique, pour produire le substrat sous forme de film polymère durci, pourvu d'un revêtement, orienté biaxialement.

2. Procédé selon la revendication 1, dans lequel ladite au moins une surface du substrat sous forme de film polymère orienté uniaxialement a une énergie superficielle d'au moins 38 dynes/cm avant le revêtement de ladite au moins une surface du substrat sous forme de film polymère.

3. Procédé selon l'une quelconque des revendications précédentes, dans lequel le substrat sous forme de film polymère orienté uniaxialement est orienté de 3 à 7 fois dans le sens machine.

4. Procédé selon l'une quelconque des revendications précédentes, dans lequel le substrat sous forme de film polymère orienté uniaxialement est orienté de 5 à 10 fois dans le sens travers.

5. Procédé selon l'une quelconque des revendications précédentes, dans lequel le substrat sous forme de film polymère pourvu d'un revêtement, orienté uniaxialement, est orienté de 3 à 7 fois dans le sens machine.

6. Procédé selon l'une quelconque des revendications précédentes, dans lequel le substrat sous forme de film polymère pourvu d'un revêtement, orienté uniaxialement, est orienté de 5 à 10 fois dans le sens travers.

7. Procédé selon l'une quelconque des revendications précédentes, dans lequel le substrat sous forme de film polymère orienté uniaxialement est orienté dans le sens machine avant le revêtement et ensuite orienté dans le sens travers après le revêtement, pour produire le substrat sous forme de film polymère pourvu d'un revêtement, orienté biaxialement.

8. Procédé selon l'une quelconque des revendications précédentes, dans lequel l'énergie électromagnétique est sous forme de lumière UV.

9. Procédé selon l'une quelconque des revendications précédentes, dans lequel ledit au moins un groupe activé par UV est un groupe chimique capable de former un radical libre quand il est exposé à l'énergie électromagnétique.

10. Procédé selon l'une quelconque des revendications précédentes, dans lequel ledit au moins un groupe fonctionnel insaturé est sélectionné dans le groupe constitué de composés acryliques, d'éthers vinyliques, de composés styréniques, et d'époxydes cycloaliphatiques, et de combinaisons de ceux-ci.

11. Procédé selon l'une quelconque des revendications précédentes, dans lequel le revêtement comprend de 1 à 40 % en poids d'au moins un composé comprenant au moins un groupe activé par UV et de 1 à 40 % en poids d'au moins un composé comprenant au moins un groupe fonctionnel insaturé.

12. Procédé selon l'une quelconque des revendications précédentes, dans lequel le revêtement comprend de 5 à 30 % en poids d'au moins un composé comprenant au moins un groupe activé par UV et de 5 à 30 % en poids d'au moins un composé comprenant au moins un groupe fonctionnel insaturé.

13. Procédé selon l'une quelconque des revendications précédentes, dans lequel le revêtement sur ladite au moins une surface du substrat sous forme de film polymère orienté biaxialement est présent à une concentration de 0,01 à 2 g/m² à l'état sec.

14. Procédé selon l'une quelconque des revendications précédentes, dans lequel le revêtement sur le substrat orienté biaxialement pourvu d'un revêtement est présent à une concentration de 0,1 à 1,5 g/m² à l'état sec.

15. Procédé selon l'une quelconque des revendications précédentes, dans lequel le procédé de l'étape de durcissement se déroule (i) avant l'orientation dans la deuxième direction, (ii) pendant l'orientation dans la deuxième direction, (iii) après l'orientation dans la deuxième direction, ou (iv) à la fois avant et pendant l'orientation dans la deuxième direction.

16. Procédé selon l'une quelconque des revendications précédentes, dans lequel le substrat sous forme de film polymère comprend au moins une couche constituée d'un matériau polymère sélectionné dans le groupe constitué d'homopolymères de propylène, de copolymères de propylène, d'homopolymères d'éthylène, de copolymères d'éthylène, d'homopolymères de butène, de copolymères de butène, de polyoléfines modifiées par des constituants polaires, de polyesters, de polyamides, de polystyrènes, de copolymères d'éthylène-alcool vinylique, et de mélanges de ceux-ci.

17. Procédé selon l'une quelconque des revendications précédentes, dans lequel le substrat sous forme de film polymère comprend en outre une deuxième couche constituée d'un matériau sélectionné dans le groupe constitué d'homopolymères de propylène, de copolymères de propylène, d'homopolymères d'éthylène, de copolymères d'éthylène, de polyoléfines modifiées par des constituants polaires, de polyesters, de polyamides, de polystyrènes, de copolymères d'éthylène-alcool vinylique, et de mélanges de ceux-ci.

18. Procédé selon la revendication 1, dans lequel le substrat sous forme de film polymère comprend une couche centrale comprenant un matériau polymère sélectionné dans le groupe constitué d'homopolymères de propylène, de copolymères de propylène, et de mélanges de ceux-ci.

19. Procédé selon la revendication 18, dans lequel le substrat sous forme de film polymère comprend une première couche pelliculaire et une couche de liaison disposée entre la couche centrale et la première couche pelliculaire.

20. Procédé selon les revendications 18 et 19, dans lequel le substrat sous forme de film polymère comprend une deuxième couche pelliculaire opposée à la première couche pelliculaire, laquelle comprend un matériau polymère sélectionné dans le groupe constitué d'homopolymères de propylène, de copolymères de propylène, d'homopolymères d'éthylène, de copolymères d'éthylène, de terpolymères d'éthylène/propylène/butène, d'homopolymères de butène, de copolymères de butène, de polyoléfines modifiées par des constituants polaires, et de mélanges de ceux-ci.

21. Procédé selon l'une quelconque des revendications précédentes, dans lequel ladite au moins une surface du substrat sous forme de film polymère est soumise à au moins un traitement de surface avant le revêtement de ladite au moins une surface du substrat sous forme de film polymère, le traitement de surface étant sélectionné dans le groupe constitué d'une décharge de plasma, d'un traitement à la flamme, d'un traitement par décharge corona, d'un rayonnement UV, d'un rayonnement électronique, et de combinaisons de ceux-ci.

22. Procédé selon l'une quelconque des revendications précédentes, dans lequel le substrat sous forme de film polymère est opaque.

23. Procédé selon l'une quelconque des revendications précédentes, dans lequel au moins une couche du substrat sous forme de film polymère est soumise à une cavitation.
